# EUROPEAN PATENT SPECIFICATION

(11) **EP 1 060 661 B1**
(45) Date of publication and mention of the grant of the patent: **16.03.2005**
(21) Application number: 00201652.5
(22) Date of filing: 08.05.2000
(51) Int. Cl.: A01K 11/00

(54) **Ear tag with mechanical security feature**
Ohrmarke mit mechanischem Manipulationsschutz
Boucle d'oreille avec système de sécurité mécanique

(30) Priority: 07.05.1999 NL 1012006
(43) Date of publication of application: 20.12.2000
(73) Proprietor: Pragmatic Network Creations ETS., Vaduz (LI); HENDRIKX, Jacobus Gerardus Maria, NL-5242 HB Rosmalen (NL)
(72) Inventor: Hendrikx, Jacobus Gerardus Maria, 5242 HB Rosmalen (NL)
(74) Representative: van Westenbrugge, Andries

(56) References cited:
- EP-A- 0 047 697
- FR-A- 2 577 380
- GB-A- 2 154 952
- NL-A- 8 702 161

## Description

The invention relates to an ear tag for establishing the identity of an animal, comprising at least one plate element, a pin, attached to the plate element, for accommodating in a hole in the ear of the animal, and a counter-element for locking the plate element with pin to the ear, which plate element comprises a plastic plate plus a metal retaining element, into which the pin is fastened, and a protective element, located in said plastic plate. The protective element is incorporated in the plastic material of the plate element in such a way that forcing of the ear tag by pushing out the pin is counteracted.

Such ear tags are known. They are used in cattle for identification of the individual animals. The aim of such identification is to provide insight into the origin of each individual animal. By this means the "family ties" can be traced, as can the hereditary characteristics of an animal. These data can play an important role in tracking down and combating abnormalities which are dangerous not only for the animal itself but also for the consumer who uses products originating from these animals. Moreover, in this context it is important that the owner, or previous owner, of the animal can be traced.

The intention is that the data of animals are stored and kept up to date in a central facility. To this end the authority which administers the register concerned must be informed immediately of changes such as birth, death and the like.

In practice, however, it is found that a not inappreciable proportion of the cattle population is nevertheless incorrectly registered. Because of the substantial economic interest associated with the health of the animals, fraud in ear tag registration is a fact. As a consequence of this the usefulness of ear tag registration has been limited to date because definite answers with regard to the condition, history and the like of each individual animal cannot be obtained with certainty.

Despite the robust joint between the pin with the plate element and the counter-element, fraud by means of replacing ear tags proves not to be too difficult. For instance, the pin can be pushed out of the plate element or counter-element using suitable tongs. Another ear tag carrying false information can then be fitted.

The aim of the invention is to provide an ear tag which is better able to resist this form of fraud by replacement.

This aim is achieved in that the retaining element is joined via at least one bend line to an auxiliary part that extends along the retaining element and has a passage through which the pin extends, and in that the protective element is joined to the auxiliary part via at least one further bend line, the said protective element extending along the auxiliary part.

Reference is made to FR-A-2577380 which discloses a brace for mounting to the leg of an animal. Said brace has a metal retaining element which is joined via at least one bend line to that extends along the retaining element and also has a passage through which a pin extends. However, an auxiliary part is lacking.

Due to the fact that the auxiliary part according to the invention is integral with the retaining element, the most effective position of the auxiliary part with respect to the retaining element is always guaranteed, including during injection moulding of the plate element.

In order to make forcing by means of a drill more difficult, the protective element is rounded on the side facing away from the pin.

Forcing by sawing through the pin is virtually impossible if the pin is surrounded by a rotatable sleeve, which is preferably diabolo-shaped, over the region between the plate element and the counter-element.

The pin then turns as the saw is moved back and forth and the saw also has the tendency to slide towards the middle of the pin as a consequence of the diabolo shape. However, this is the location of the ear of the animal, as a result of which sawing is made even more difficult.

Furthermore, the plate element can be widened in the direction away from the pin and reinforced at the widened end to prevent rolling up. As a result it is no longer possible to reduce the size of the plate element to such an extent that this can easily be removed through the hole in the ear of the animal.

The plastic plate can bear one or more symbols, which may or may not be detectable to the naked eye, at the location of the protective element.

If an attempt is made to force the ear tag, these symbols are damaged, which has a preventive effect or in any event brings fraud to light.

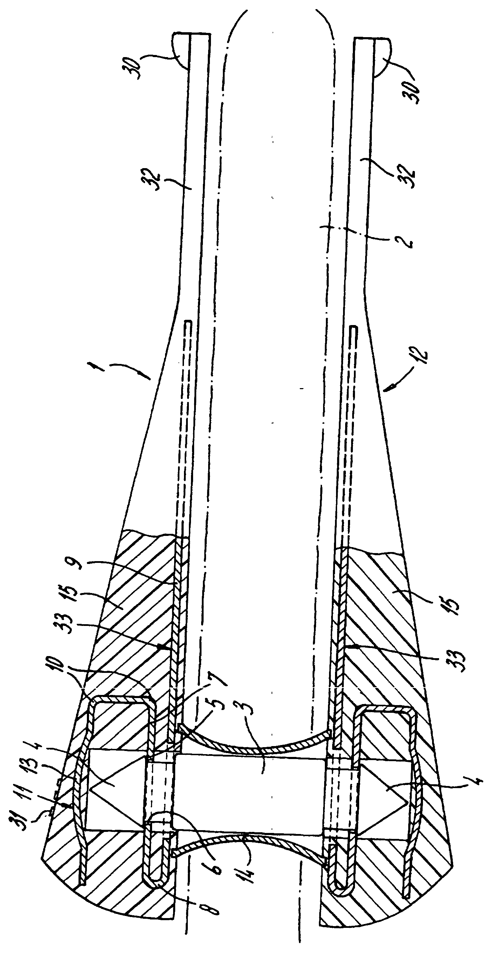

The invention will be explained in more detail below with reference to an illustrative embodiment shown in the figure.

The figure shows an ear tag 1 in the assembled state, the ear 2 being indicated by broken lines.

The ear tag comprises a plate element 1 and an identical counter-element 12, joined to one another by means of a pin 3. The plate element 1 comprises a metal element 33 that is incorporated in a plastic plate 15. The metal element 33 comprises the retaining element 9, the auxiliary part 7 and the protective element 11. The pin 3 has a conical head 4 at both ends, the shoulder 5 of each head 4 being fixed in place in the hole 6 of each of the auxiliary parts 7 by snap-fitting.

Said auxiliary part 7 forms an integral whole with the retaining element 9 via bend line 8 and an integral whole with protective element 11 via bend lines 10.

The purpose of retaining element 9 is to provide robust anchoring of pin 3 in the plate element 1 and, respectively, in the counter-element 12 via the auxiliary part 7 forming an integral whole therewith.

According to the invention the head 4 of the pin 3 is protected by the protective element 11 against forcing by means of tongs. The tongs, one jaw of which would engage beneath the plate element 1, and one jaw on the top thereof, would merely compress the plastic material present between the protective element 11, the auxiliary part 7 and the retaining element 9 to some extent, without this, however, leading to the head 4 being pushed out of the hole 6.

The protective element 11 also has a rounded shape 13 at the location of the head 4. If an attempt were to be made to reach the pin and to force it using a drill, this rounded shape would cause the drill to slip.

The pin 3 is also preferably rotatable with respect to the plate element (and the counter-element 12, respectively) so that any engagement by a drill would lead to the pin 3 turning with the drill and no hole, with weakening as the result, would be obtained.

The description given above essentially relates to the plate element 1, but also applies to the identical counter-element 12.

The pin 3 is surrounded by a diabolo-shaped rotatable sleeve 14. If an attempt were to be made to force the pin 3/sleeve 4 by sawing, first of all the sleeve 14, and when this failed the pin 3 as well, would turn with the movement of the saw. The effect of a saw is virtually eliminated as a result.

As a consequence of the diabolo shape of the sleeve 14, the saw also has the tendency to slide towards the middle of the sleeve 14. However, the presence of the ear 2 prevents this movement to some extent, as a result of which forcing is made even more difficult.

Both the plate element 1 and the counter-element 12 can have an edge reinforced by means of one or more ribs 30. These ribs prevent said elements 1, 12 being rolled up and subsequent removal of the ear tag via the hole in the ear of the animal.

An elongated transponder or chip can, for example, have been accommodated in the rib(s). Removal of said rib(s) would then result in damage to the transponder or chip, as a result of which fraud is made additionally difficult. The ear tag can then no longer be detected electronically.

Drilling out of the pin and the like is made additionally more difficult if the elements 1, 12 have corrugations and/or holographic images at the location of their mutual snap-fit joint. In the case of attempted manipulation such corrugations/images would be irreparably damaged.

The symbols 31 on the plastic plate 15 can, for example, also comprise a barcode, which is damaged if an attempt is made to force the ear tag. In this case the symbols are then also no longer readable, such that the fraud comes to light in any event.

## Claims

1. Ear tag for establishing the identity of an animal, comprising at least one plate element (1), a pin (3), attached to the plate element (1), for accommodating in a hole in the ear (2) of the animal, and a counter-element (12) for locking the plate element (1) with pin (3) to the ear (2), which plate element (1) comprises a plastic plate (15) plus a metal retaining element (9), into which the pin (3) is fastened, and a protective element, located in said plastic plate (15), protective element (11) is incorporated in the plastic material of the plate element (1) in such a way that forcing of the ear tag by pushing out the pin (3) is counteracted **characterised in that** the retaining element (9) is joined via at least one bend line (8) to an auxiliary part (7) that extends along the retaining element (9) and has a passage (6) through which the pin (3) extends, and **in that** the protective element (11) is joined to the auxiliary part (7) via at least one further bend line (10), the said protective element (9) extending along the auxiliary part (7).

2. Ear tag according to claim 1, wherein the protective element (11) is partially rounded (13) on the side facing away from the pin (3).

3. Ear tag according to claim 1 or 2, wherein the pin (3) has been snapped home in the opening (6).

4. Ear tag according to claim 1, 2 or 3 wherein the pin (3) is surrounded by a rotatable sleeve (14) over the region between the plate element (1) and the counter-element (12).

5. Ear tag according to Claim 4, wherein the rotatable sleeve (14) is diabolo-shaped.

6. Ear tag according to one of the preceding claims, wherein the plate element (1) is widened in the direction away from the pin and reinforced (30) at the widened end to prevent rolling up.

7. Ear tag according to one of the preceding claims, wherein the plate element (1) bears an identifier, such as a number, barcode and the like.

8. Ear tag according to one of the preceding claims, wherein the counter-element (12) is identical to the plate element (1).

9. Ear tag according to one of the preceding claims, wherein the plastic plate (15) bears one or more symbols (31), which may or may not be detectable to the naked eye, at the location of the protective element (11).

## Patentansprüche

1. Ohrmarke zum Feststellen der Identität eines Tieres, die wenigstens ein Plattenelement (1), einen Stift (3), der an dem Plattenelement (1) zur Aufnahme in einem Loch im Ohr (2) des Tiers angebracht ist, sowie ein Gegenelement (12) zum Arretieren des Plattenelementes (1) mit dem Stift (3) an dem Ohr (2) umfasst, wobei das Plattenelement (1) eine Kunststoffplatte (15) und ein Metall-Halteelement (9), in dem der Stift (3) befestigt wird, sowie ein schützendes Element umfasst, das sich in der Kunststoffplatte (15) befindet, wobei das schützende Element (11) in das Kunststoffmaterial des Plattenelementes (1) so integriert ist, dass dem gewaltsamen Öffnen der Ohrmarke durch Ausdrücken des Stiftes (3) entgegengewirkt wird,
**dadurch gekennzeichnet,**
**dass** das Halteelement (9) über wenigstens eine Biegelinie (8) mit einem Zusatzteil (7) verbunden ist, das sich an dem Halteelement (9) entlang erstreckt und einen Durchlass (6) hat, durch den sich der Stift (3) hindurch erstreckt, und dass das schützende Element (11) mit dem Zusatzteil (7) über wenigstens eine weitere Biegelinie (10) verbunden ist, wobei sich das schützende Element (9) an dem Zusatzteil (7) entlang erstreckt.

2. Ohrmarke nach Anspruch 1, wobei das schützende Element (11) auf der von dem Stift (3) weggewandten Seite teilweise abgerundet (13) ist.

3. Ohrmarke nach Anspruch 1 oder 2, wobei der Stift (3) in die Öffnung (6) eingeschnappt ist.

4. Ohrmarke nach Anspruch 1, 2 oder 3, wobei der Stift (3) über den Bereich zwischen dem Plattenelement (1) und dem Gegenelement (12) von einer drehbaren Hülse (14) umgeben ist.

5. Ohrmarke nach Anspruch 4, wobei die drehbare Hülse (14) Diaboloform hat.

6. Ohrmarke nach einem der vorangehenden Ansprüche, wobei das Plattenelement (1) in der Richtung von dem Stift weg aufgeweitet und am aufgeweiteten Ende verstärkt (30) ist, um Aufrollen zu verhindern.

7. Ohrmarke nach einem der vorangehenden Ansprüche, wobei das Plattenelement (1) eine Kennung, wie beispielsweise eine Nummer, einen Strichcode und dergleichen, trägt.

8. Ohrmarke nach einem der vorangehenden Ansprüche, wobei das Gegenelement (12) mit dem Plattenelement (1) identisch ist.

9. Ohrmarke nach einem der vorangehenden Ansprüche, wobei die Kunststoffplatte (15) an der Position des schützenden Elementes (11) eines oder mehrere Symbole (31) trägt, die mit dem bloßen Auge nicht zu erkennen sind.

## Revendications

1. Marquage auriculaire pour établir l'identité d'un animal, comprenant au moins un élément de plaque (1), une tige (3), fixée sur l'élément de plaque (1), pour être logée dans un trou de l'oreille (2) de l'animal, et un contre - élément (12) pour bloquer l'élément de plaque (1) avec la tige (3) sur l'oreille (2), lequel élément de plaque (1) comprend une plaque en plastique (15), plus un élément de retenue métallique (9), dans lequel est fixée la tige (3), et un élément de protection, situé dans ladite plaque en plastique (15), ledit élément de protection (11) est incorporé dans le matériau plastique de l'élément de plaque (1) de telle manière à contrecarrer le forçage du marquage auriculaire (11) par poussée hors de la tige (3)
**caractérisé en ce que** l'élément de retenue (9) est réuni via au moins une ligne de courbure (8) sur une partie auxiliaire (7) qui s'étend le long de l'élément de retenue (9) et présente un passage (6) à travers lequel s'étend la tige (3), et **en ce que** l'élément de protection (11) est réuni à la partie auxiliaire (7) via au moins une autre ligne de courbure (10), ledit élément de protection s'étendant le long de la partie auxiliaire (7).

2. Marquage auriculaire selon la revendication 1, dans lequel l'élément de protection (11) est partiellement arrondi (13) sur le côté détourné de la tige (3).

3. Marquage auriculaire selon les revendications 1 ou 2, dans lequel la tige (3) a été enfichée dans l'ouverture (6).

4. Marquage auriculaire selon les revendications 1,2 ou 3, dans lequel la tige (3) est entourée d'une enveloppe rotative (14) sur la région entre l'élément de plaque (1) et le contre - élément (12).

5. Marquage auriculaire selon la revendication 4, dans lequel l'enveloppe rotative (14) est en forme de diabolo.

6. Marquage auriculaire selon l'une des revendications précédentes, dans lequel l'élément de plaque (1) est élargi dans la direction éloignée de la tige et renforcée (30) sur l'extrémité élargie pour empêcher qu'il ne s'enroule.

7. Marquage auriculaire selon l'une des revendications précédentes, dans lequel l'élément de plaque (1) porte un identificateur, tel qu'un numéro, ,un code barre et analogue.

8. Marquage auriculaire selon l'une des revendications précédentes, dans lequel le contre - élément (12) est identique à l'élément de plaque (1).

9. Marquage auriculaire selon l'une des revendications précédentes, dans lequel la plaque plastique (15) porte un ou plusieurs symboles (31) qui peuvent être ou ne être détectables à l'oeil nu, à l'emplacement de l'élément de protection (11).
